# EUROPEAN PATENT APPLICATION

(11) **EP 2 337 322 A1**
(43) Date of publication of application: **22.06.2011**
(21) Application number: 09252789.4
(22) Date of filing: 15.12.2009
(51) Int. Cl.: H04M 1/725

(54) **Communications device**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A communications device maintains stored telephone numbers with free text descriptions 51, 52, 53 in each of a number of user profiles 41, 42, 43 etc. When an incoming call is received, the calling number is identified and the free text description displayed according to one of the profiles. If the number is stored in more than one such profile 41 42, the selection of the profile from which the free text description is to be used is determined according to a precedence rule which depends on which profile, if any, is open, and on any access restrictions applicable to the various profiles.

## Description

This invention relates to communications devices, and in particular to the display of information relating to a calling party when an incoming call is received.

One facility now available on many communication devices is a "calling line indication (CLI)", in which the directory number of the line from which an incoming call is generated is identified by the apparatus and displayed to the user. The CLI is used for conventional voice calls, and also for applications such as voicemail messages and "SMS" text messages.

Many communications devices have a "stored number" or "speed dial" facility which allows individual telephone numbers to be stored in a memory in the device, associated with a free-text indication of the person or business whose directory number it is, for example "John" or "Doctor". This allows the user to call one of the stored numbers by pressing one or two keys instead of having to remember, and correctly dial, the actual directory number. (In this specification, the traditional term "dial" will be used for the process of manually selecting a telephone number digit-by-digit, although almost all telephone handsets now have push-button or touch-sensitive keypads).

These two facilities are often combined, so that if an incoming call has a CLI which is one of those stored in the speed-dial memory, the free-text indication associated with that number is displayed instead of the number itself.

It is known to provide a synchronisation facility to allow data stored in the memory of one device to be copied into another. One use of such a facility is to allow numbers in the memory of a mobile telephone to be copied into the user's fixed-line terminal, to avoid the need to manually enter the data twice.

Since most households only have one fixed telephone line, which may be used by all members of the household, a problem can arise if two or more users try to synchronise their stored number memories with that of the fixed-line terminal. At one extreme, the most recent user to do so could over-write the previous user's data. At the other extreme, all the individual users' data may become amalgamated into one large data set, making subsequent updating difficult.

A particular difficulty may occur if different users have stored the same number with different free-text indications - for example "Mum" and "Grandma" - or different numbers with the same indication: for example the name "Mum" may be associated with different telephone numbers for each member of a household.

However, it may be useful to have a number added to the directory by one person accessible to others, for example if someone known to all members of the household changes their telephone number, so a rigid separation of the directories may also have drawbacks.

US2008/0089497 (Walter) discloses a terminal in which each of several users has their own stored-number memory. In the event of an incoming call from a number in one or more of the stored-number memories, the identity of the or each user in whose memory that number appears, together with the free-text indication under which that number is stored in each such memory, is displayed.

This prior art system provides a user with more data than the individual user needs, which can be confusing. One or more of the users may also wish some of their contact details to be withheld when other users are operating the terminal, for personal or business reasons. The present invention is directed to a terminal in which the user currently operating the terminal is provided with only the data most relevant to that person.

According to the invention, there is provided a communications terminal comprising a profile store for holding a plurality of user profiles, each user profile being capable of storing one or more items of caller identification data, and a call handler for receiving incoming calls, the call handler comprising an associated retrieval processor for retrieving caller identification data from an incoming call, and for identifying a user profile store holding matching caller identification data, retrieving data associated with the caller identification data, and controlling the subsequent handling of the incoming call according to the associated data so retrieved,
wherein the profile store comprises means for sorting the user profiles into a ranked order, and the call handler is arranged to select the highest-ranked user profile holding matching caller identification data and to control the subsequent handling of the call according to data only from the selected user profile.

The invention also extends to a method of handling incoming communications calls containing caller identification data, in which associated data related to the caller identification data is retrieved from a store for use in the subsequent handling of the call,
wherein the store comprises a plurality of user profiles sorted into a ranked order, and the associated data is retrieved only from the highest-ranked profile containing data associated with the caller identification data in the incoming call.

As already mentioned, the term "call" is used in this specification to mean any incoming communication, whether a conventional voice call, a voicemail, a text alert, or some other means.

The ranking of the user profiles is preferably dynamically variable, dependant on at least some of the following criteria: the level of security applied to the user profile, how recently the user profile has been opened by a user, and whether the user profile is currently open. In the preferred embodiment, any profile that is currently open it is ranked highest, a default profile is ranked higher than any profile that is not open, and profiles having otherwise equivalent rankings are sorted according to how recently they were accessed.

The control of the subsequent handling of the incoming call may comprise the display of data associated with the caller identification data in the selected user profile. It may also comprise routing the call to a handset associated with the selected user profile.

In the preferred embodiment the terminal maintains a default profile and a number of individual user profiles. Each user profile can be managed separately, typically by different individuals, so that each individual can maintain his or her own list of useful contacts, and can update it, either by synchronising with their own personal mobile telephone handset or by manual entry. Password control may be applied to control some or all of the functions associated with the user profiles, such as reading or changing the details. It is, of course, possible for one user to maintain two or more separate profiles, for example a password-protected one for business contacts and an unprotected one for social contacts.

Any user operating the terminal has access to the default profile. They may, if they have a personal profile stored on the device, open their personal profile.

The individual profiles can have various access criteria - in the described embodiment there are four such criteria, determining what, if any, functions can be operated on that profile by users without requiring the password.

To determine which profile is used to access a name for display when an incoming call is received, the user profiles are sorted in order, with those having the least restrictive access first. Above these are sorted the default profile and, in prime position, the profile, if any, currently in use. When a profile is closed, it reverts to its position according to its access criteria.

If two or more profiles have the same access criteria, they may be sorted either randomly, or according to some other criterion such as which of them was accessed the most recently.

When an incoming call is received, the CLI is compared with each profile in turn, starting with the highest ranked one, until a match is found. The name associated with the CLI in that profile is selected and displayed. The display may also indicate which profile has been used - as mentioned above, the same name may be matched to different CLIs in different profiles.

The terminal may be arranged to access other functions in a sequence which depends on the user profile selected. For example it may attempt to call a mobile handset associated with the profile that was selected, cascading to the others in sequence if no reply is received from the first, or if it is out of range.

An embodiment of the invention will now be described by way of example and with reference to the drawings, in which:
Figure 1 illustrates the functional elements of the user terminal which cooperate to perform the invention.
Figure 2 illustrates the process by which the user profiles are sorted into a precedence order
Figure 3 illustrates the processes that take place when an incoming call is received.
Figure 4 illustrates a typical set of user profiles.

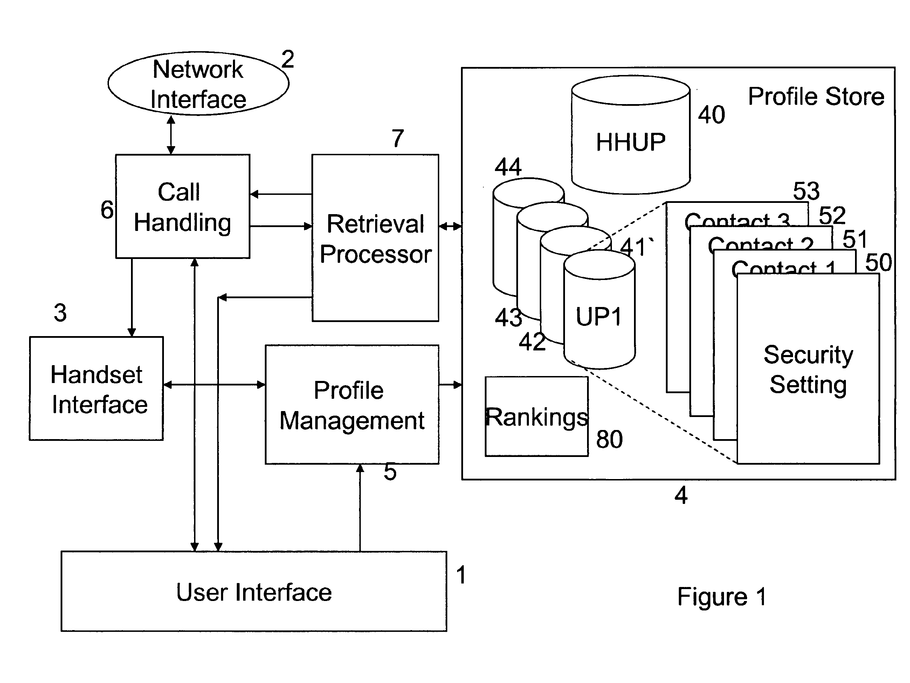

It should be understood that the functional elements depicted in Figure 1 may be embodied in software running on a data processing device.

The device shown in Figure 1 has three interfaces with its environment. Firstly, there is a user interface 1. Typically this will include an output such as a display screen and an input such as a keyboard. The interface may be a touch-sensitive screen combining both input and output functions. The device may employ other modes of input, such as voice-activation, and of output, such as audio or haptic (tactile).

There is an interface 2 with the telecommunications network through a telephone or internet termination point. This connection may be through a wired connection, or it may be for example a DECT "cordless" or "wi-fi" (IEEE 802.11) "wireless" connection to the network termination point.

In this embodiment there is also an additional interface 3 for connection with associated terminals. Such a connection can use short-range wireless technology such as the "Bluetooth" ad hoc networking protocols. It may instead be a dock for insertion of a handset, or the SIM from such a handset.

Alternatively, such handsets may connect to the device through the network connection interface 2.

The three principal functions of the device which relate to the present invention are user profile storage (4), user-profile management (5), and call handling (6), which includes user profile retrieval (7).

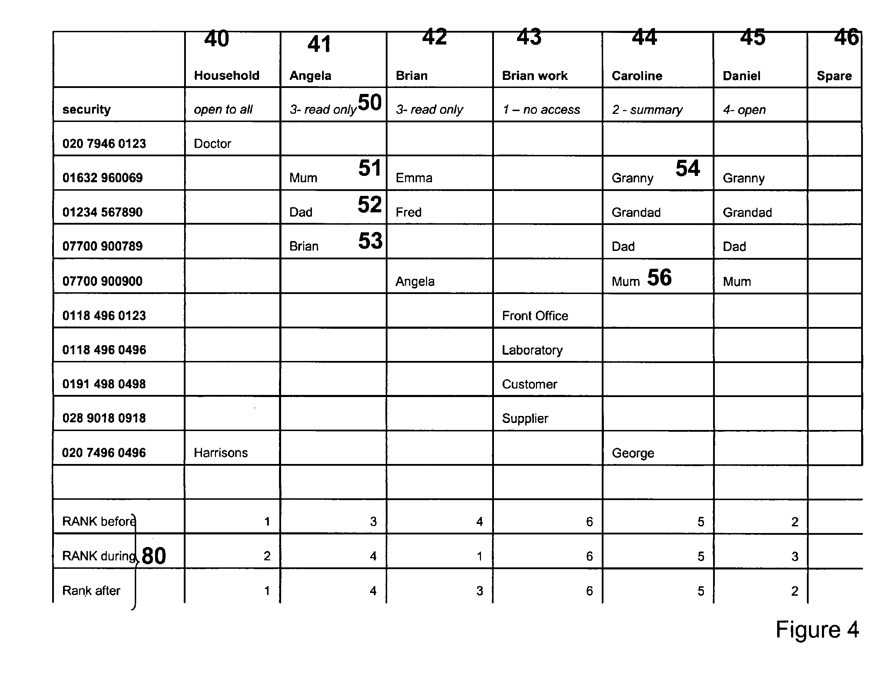

The user profile store 4 maintains a user profile 41, 42, 43, 44, etc for each of a number of individual users. (See Figure 4) There is also a default profile 40, known herein as the "household" profile and accessible to all users, whether or not they have an individual user profile 41, 42, 43, 44, 45....

As depicted in Figure 1 for the user profile 41, each profile stores a security setting 50 and a number of contact details 51, 52, 53 etc. The contact details each comprise a directory number and/or CLI identifier, together with data entered by the user to be associated with the CLI/directory number. This data may be a name or other text information, such as "Mum" or "Doctor", or it may be an image such as a photograph.

It is a feature of the invention that the same number/CLI may be stored in different profiles with different respective associated data - for example different users in the same household may know one person by different names, such as "Mum" (51) and "Grandma" (54). Moreover, the same data (name) may be stored in different profiles against different numbers - for example different users may have different "Mum"s (51, 56), or indeed doctors.

All these settings are under the control of the user, who may set a password or "PIN" (personal identification number) to adjust the security setting 50 to control access to the profile by other users. In this embodiment the security setting of the household profile 40 allows any user access to read the data, or to change it. In variants of the embodiment a password or PIN may be required to change its data.

The profile management system 5 may be set up to prevent identical user data being stored against two or more different numbers in the same profile, or having one number stored against different user data in the same profile.

The profile store 4 also includes a ranking list 80, in which the individual profiles are each allocated a unique ordinal position by a process to be described later.

The profile management processor 5 allows a user to change the content of one or more of the profiles 40, 41, 42, 43 etc, subject to any access control requirements attached to that profile. The profile management processor receives inputs from the user interface 1 to add, update or delete individual entries 51, 52, 53, etc, or to change the security setting 50.

A typical set of security settings may be:
1. All Contact data protected by PIN
2. Contact Summary available to other users, but full details protected by PIN
3. Full Contact Details available to other users (Read only), but amendment is PIN protected
4. Not PIN protected (any user may read or modify the data)

The number of profiles may be fixed, in which case there may be spare (empty) profiles 46 maintained by the store 4. A new user may then adopt one of these profiles.

A user may change the security settings for any profile for which he knows the PIN, or which does not already have one.

In this example, the difference between settings 2 and 3 is that users may be able to see who the contacts are without a PIN, but call record details such as when calls were made to or from that number. Other differences, for instance personal data such as postal or email address, may also be made unavailable at the more secure setting.

The profile management processor 5 may also receive inputs from a separate user handset through the additional interface 3, for the purpose of synchronising the stored data in the user handset with that in the user profile 41. Although not depicted in the Figure, synchronisation may also be performed in the opposite direction, by using the data in the relevant user profile 41 to update the data in the mobile terminal. The interface 3 may be a "Bluetooth" terminal or the like, or it may be a dock for physical connection of a complete handset or of a SIM (subscriber interface module).

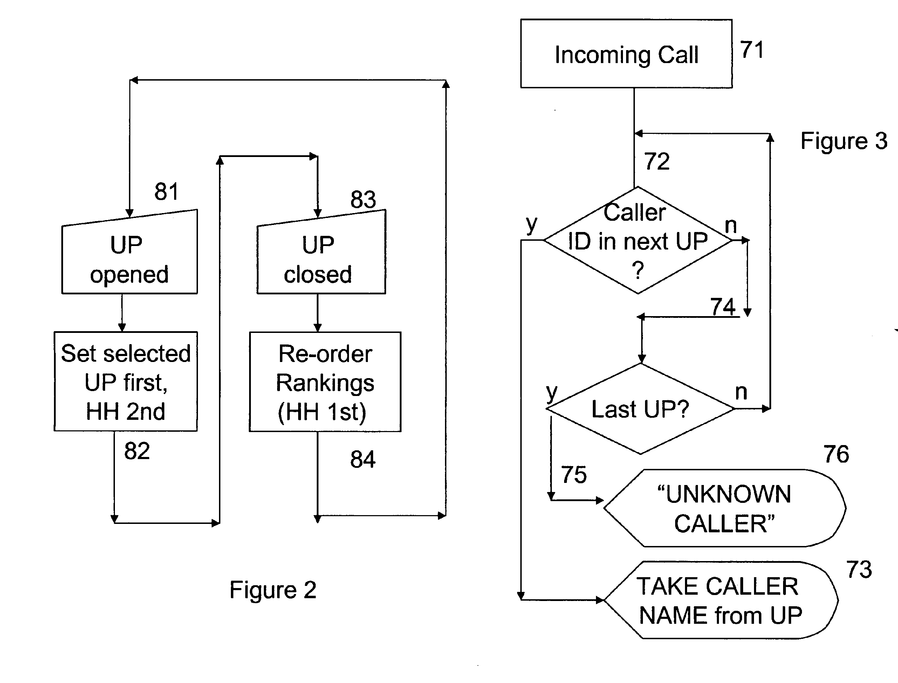

The ranking list 80 is updated by the profile management system when a user accesses one of the user profiles 41, 42, 43 etc, and again when that profile is closed. The procedure will now be described with reference to Figure 2.

Whenever no user profile is open, the default (household) profile 40 is the highest-ranked profile. The others are ranked below it, in an order determined by their security settings. In the example shown in Figure 5, the profile 45 has the lowest (most open) security setting and is placed second, followed by the two profiles 41, 42, with security setting "3", the profile 44 with security setting "2", and finally the profile 43 with the highest (most restrictive) security setting "1", to which no access is permitted without the PIN.

When a user opens a user profile 42, (whether his own or someone else's) (step 81), the rankings list is revised from its previous order by placing the newly opened profile 42 in first position (step 82). The rest of the profiles 40, 41, 43, 44 will retain their existing order. It will therefore be apparent that the second position in the ranking will then be occupied by the default profile 40, with the other user profiles lower down the ranking, in an order determined by their security settings and previous accession history.

Depending on the access privileges available to the user, namely whether he has used the PIN, and/or what security settings are in place, the user may read or modify the details in the profile. Eventually he will close the profile (step 83), at which point the ranking is revised (step 84). The user profile 42 that has just been closed is now ranked below any user profiles (40, 45) having less restrictive access rights, but above any profile 41 having the same rights or having more restrictive rights (43, 44). Thus, among profiles with the same security setting (41, 42), the profile 42 to have been accessed most recently is ranked the highest.

Consequently, the rankings will return to their original state before the profile 42 was opened, unless its security setting has been changed whilst it was open. However, profiles 41, 42 with equal security levels may be sorted randomly or, as in this embodiment, they may be sorted by time of most recent access (note in Figure 4 that the profile 42 moves from fourth to third in rank order as it has become more recently accessed than the other profile 41 which has the same security level.

In any case, the default profile 40 will return to first position in the ranking when no other profile is open.

It is assumed in the above discussion that only one profile can be open at a time, and that, on closing one profile, the user is returned to the default profile before he can open another user profile. Any modifications to the procedure that would be required if two or more profiles may be open at the same time will be apparent to the person skilled in the art.

The process by which an incoming call received by the communications terminal is processed by the call handling unit 6 will now be described with reference to Figure 3. The call handling unit receives a call through the network interface 2 and forwards the CLI data to the retrieval processor (step 71). The retrieval processor identifies, from the rankings list 80, the user profile that is currently highest ranked. If any user profile 41 is currently open, that is the currently-highest ranked profile. Otherwise, the default profile 40 is highest ranked. The retrieval processor then attempts to match the CLI with those stored in the selected profile 40, 41 (step72). If it identifies a match, it retrieves the caller name as identified in the user profile (step 73), and returns that data to the retrieval processor 7 for display by the user interface 1.

The identity of the user profile from which the data has been retrieved may also be displayed - this allows a user reading the display to distinguish between people stored in different profiles with different CLIs but under the same identifier (e.g. different users may have stored different CLIs against the name "Mum").

If the CLI is not present in the first user profile (step 74) the retrieval processor accesses the next one in the ranking (step 72 repeated). If a user profile is currently open, this next profile will be the default profile 40. If no user profile is currently open, the next profile will be the one with the least restrictive security setting or, if there is more than one with the same setting, the one which was most recently accessed.

This process continues until either a match is found (step 73, repeated), or all the profiles have been interrogated and the CLI has not been found in any of them (step 75). In this case the retrieval processor 7 causes a message such as "unknown caller", or the directory number associated with the CLI, to be displayed (step 76).

Security settings may be set to prevent certain CLIs being displayed unless the profile in which it is stored is currently open. Any such profile for which that is true is treated as if the caller ID is not stored therein on any iteration of the process other than the first. Of course, the same CLI may be stored on another profile lower down the ranking, in which case it will be retrieved with the name associated with it in that profile.

When the first profile in the current ranking to have the required CLI is identified, (step 73) other functions may be activated. For example, if the user profile is associated with a particular mobile handset, and that handset is in range of the handset interface 3, the interface may transmit a signal causing that handset, but no other that may be in contact with the interface 3, to generate a ringing tone. If the call is answered on the handset, the call can be diverted to that handset over the interface 3.

## Claims

1. Communications terminal comprising a profile store for holding a plurality of user profiles, each user profile being capable of storing one or more items of caller identification data, and a call handler for receiving incoming calls, the call handler comprising an associated retrieval processor for retrieving caller identification data from an incoming call, and for identifying a user profile store holding matching caller identification data, retrieving data associated with the caller identification data, and controlling the subsequent handling of the incoming call according to the associated data so retrieved,
wherein the profile store comprises means for sorting the user profiles into a ranked order, and the call handler is arranged to select the highest-ranked user profile holding matching caller identification data and to control the subsequent handling of the call according to data only from the selected user profile.

2. A terminal according to claim 1, further comprising a display unit and wherein the call handler causes the caller identification data from the selected user profile to be displayed..

3. A terminal according to claim 1 or claim 2, further comprising an interface unit for connection to one or more associated handsets, and wherein the call handler routes an incoming call by way of the interface to a handset associated with the selected user profile.

4. A terminal according to claim 1, claim 2 or claim 3, wherein each user profile has an associated security level applied, and the ranking of each user profile is dependant on its level of security.

5. A terminal according to claim 1, claim 2, claim 3 or claim 4, wherein the profile store is arranged to modify the ranked order of profiles in response to a user input accessing one of the profiles.

6. A terminal according to claim 5, wherein any user profile that is currently open is ranked highest.

7. A terminal according to claim 6, wherein one of the profiles is a default profile, and is ranked higher than any profile that is not open.

8. A method of handling incoming communications calls containing caller identification data, in which associated data related to the caller identification data is retrieved from a store for use in the subsequent handling of the call,
wherein the store comprises a plurality of user profiles sorted into a ranked order, and the associated data is retrieved only from the highest-ranked profile containing data associated with the caller identification data in the incoming call.

9. A method according to claim 8, wherein the subsequent handling of the incoming call comprises the display of data associated with the caller identification data in the selected user profile.

10. A method according to claim 8 or claim 9, wherein the subsequent handling of the incoming call comprises routing the call to a handset associated with the selected user profile.

11. A method according to claim 8, claim 9 or claim 10, wherein each user profile has a security level applied, and the ranking of each user profile is dependant on the level of security applied to the user profile.

12. A method according to claim 8" claim 9, claim 10, or claim 11, wherein the ranking of each user profile is dependant on how recently the user profile has been accessed by a user.

13. A method according to claim 12, wherein any user profile that is currently open is ranked highest.

14. A method according to claim 13, wherein one of the profiles is a default profile, and is ranked higher than any profile that is not open.
